# EUROPEAN PATENT APPLICATION

(11) **EP 4 066 994 A1**
(43) Date of publication of application: **05.10.2022**
(21) Application number: 20893580.9
(22) Date of filing: 26.11.2020
(51) Int. Cl.: B24B 19/14, B24B 49/04, B24B 5/00, B24B 41/06

(54) **GANTRY GRINDING MACHINE**

(30) Priority: 27.11.2019 CN 201911183507
(71) Applicant: Kede Numerical Control Co., Ltd., Dalian, Liaoning 116000 (CN)
(72) Inventor: GONG, Xinglin, Dalian, Liaoning 116000 (CN); HE, Xingjian, Dalian, Liaoning 116000 (CN); YIN, Shuqiang, Dalian, Liaoning 116000 (CN); TANG, Rui, Dalian, Liaoning 116000 (CN); BAO, Wenlu, Dalian, Liaoning 116000 (CN); WANG, Feng, Dalian, Liaoning 116000 (CN); LIU, Renwei, Dalian, Liaoning 116000 (CN); CHEN, Yufeng, Dalian, Liaoning 116000 (CN)
(74) Representative: JD&P Patent Attorneys Joanna Dargiewicz & Partners
(86) International application number: PCT/CN2020/131656
(87) International publication number: WO 2021/104343

(57) **Abstract**

The present invention discloses a planogrinder including a measuring device, wherein the measuring device can move along the X-axis direction, an optical probe is provided at one end of the measuring device close to a bed base, and the optical probe is used for real-time detection of an outer diameter of a workpiece being machined. The planogrinder provided by the present invention can measure dimensions of the workpiece during rotation through the measuring device, and can control the deformation of the workpiece during the rotation process, thereby making the machining accuracy of the workpiece controllable during use.

## Description

### TECHNICAL FIELD

The present invention relates to the field of planogrinder, particularly, to a planogrinder capable of measuring dimensions of a rotating workpiece.

### BACKGROUND ART

The workpiece grinding of current grinding machines is mainly divided into vertical grinding and horizontal grinding. Ordinary vertical and horizontal grinding machines can ignore the centrifugal force when machining a single shaft. However, large groups of rotor parts like blisks have a large centrifugal force in the process of use, and the centrifugal force will cause slight deformation of the external dimensions of the parts. Ordinary grinding machines cannot achieve high-speed grinding, and in the state of high-speed rotary grinding, the outer diameter of the workpiece cannot be measured, and thus, the consistency between the workpiece grinding state and the actual use state cannot be guaranteed, the workpiece needs to be checked twice, and the work efficiency is affected.

### SUMMARY OF INVENTION

The present invention discloses a planogrinder that is capable of measuring dimensions of a rotating workpiece.

In order to achieve the above object, the present invention provides the following solution.

A planogrinder including a measuring device, wherein
the measuring device can move along the X-axis direction; an optical probe is provided at one end of the measuring device close to a bed base; and the optical probe is used for real-time detection of an outer diameter of a workpiece being machined.

Further, a workpiece sliding table that can move along the X-axis is provided on the bed base; one end of the workpiece sliding table is fixed with a first support; a power spindle is provided on the first support; the other end of the workpiece sliding table is provided with a second support; the second support can move along the X-axis on the workpiece sliding table; a driven spindle is provided on the second support; and the opposite end surfaces of the power spindle and the driven spindle are respectively provided with a reference plate and a hydraulic clamping device in sequence.

Further, a floating support structure is provided on the workpiece sliding table; the floating support structure includes a floating bracket which can move along the X-axis direction on the workpiece sliding table; a floating support plate is provided on the floating bracket; and the floating support plate can be adjusted in position via an up-down adjustment screw and a left-right adjustment screw.

Further, a grinding wheel dresser is provided on the first support. Further, the measuring device includes a base and a slide rest; the base is fixed on a column; the slide rest can move along the Y-axis direction on the base; and the optical probe is fixed on the slide rest.
Further, a grating ruler is provided on the base along the Y-axis direction.

Further, a rail is provided on the base along the Y-axis direction; a slider matched with the rail is provided on the slide rest; one end of the base away from the bed base is provided with an electric motor; and the electric motor cooperatively drives the slide rest through a screw rod provided on the base and a screw nut provided on the slide rest.

Further, there are two of the optical probes in total; the two optical probes are arranged opposite to each other along the Z-axis direction; a proximity switch is provided between the two optical probes; and the proximity switch is used to measure the distance between the measuring device and a workpiece being machined.

Further, a grinding wheel storage is fixed on the column.

Further, a turning tool holder is fixed at the lower end of a spindle.

The planogrinder provided by the present invention can measure dimensions of the workpiece during rotation through the measuring device, and can control the deformation of the workpiece during the rotation process, thereby making the machining accuracy of the workpiece controllable during use. At the same time, the planogrinder can also realize the rapid replacement of grinding wheels for grinding, and realize the replacement of grinding wheels of various specifications and types. In addition, the planogrinder can also realize convenient clamping of the workpiece. The planogrinder clamps the workpiece by hydraulic pressure, and thus reduces the damage to the workpiece caused by mechanical clamping and solves the problem that the clamping force cannot be controlled.

### BRIEF DESCRIPTION OF DRAWINGS

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.
FIG. 1 is the structure schematic diagram of the planogrinder disclosed by the present invention.
FIG. 2 is the structure schematic diagram of the measuring device of the present invention.
FIG. 3 is the main view schematic diagram of the workpiece sliding table of the present invention.
FIG. 4 is the top view schematic diagram of the workpiece sliding table of the present invention.
FIG. 5 is the main view schematic diagram of the planogrinder disclosed by the present invention.
FIG. 6 is the main view of the floating support structure of the present invention.

In these figures:
1. measuring device; 11. optical probe; 12. base; 13. slide rest; 14. rail; 15. electric motor; 16. proximity switch; 17. grating ruler;
2. gantry; 21. column; 22. spindle; 23. grinding wheel;
3. bed base;
4. workpiece sliding table; 41. first support; 42. power spindle; 43. second support; 44. driven spindle; 45. hydraulic clamping device; 46. reference plate;
5. grinding wheel dresser;
6. grinding wheel storage;
7. turning tool holder;
8. floating support structure; 81. floating bracket; 82. floating support plate; 83. up-down adjustment screw; 84. left-right adjustment screw; 85. handle; 86. wedge block.

### DESCRIPTION OF EMBODIMENTS

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

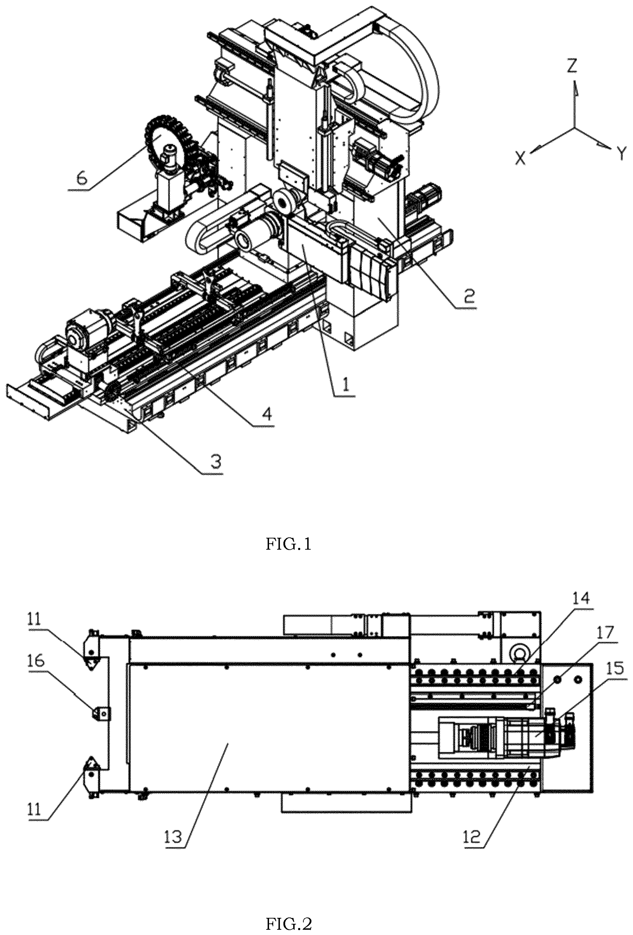

As shown in FIG. 1, the planogrinder includes: the bed base 3, and the gantry 2; the gantry 2 can move along the X-axis direction on the bed base 3, a driving electric motor and a rail arranged along the Y-axis direction are provided on a beam at the top of the gantry, the driving electric motor drives a gantry saddle to move along the Y-axis direction on the rail of the beam through a screw rod, and the spindle 22 is connected to the gantry saddle through a gantry ram and moves along the Z-axis direction on the gantry saddle.

The planogrinder also includes the measuring device 1; the measuring device 1 can move along the X-axis direction, the optical probe 11 is provided at one end of the measuring device 1 close to the bed base 3, and the optical probe 11 is used for real-time detection of an outer diameter of a workpiece being machined.

Further, as shown in FIG. 2, the measuring device includes the base 12 and the slide rest 13, the base 12 is fixed on the column 21, the slide rest 13 can move along the Y-axis direction on the base 12, and the optical probe 11 is fixed on the slide rest 13. The rail 14 is provided along the Y-axis direction on the base 12, a slider matched with the rail 14 is provided on the slide rest 13, the end of the base 12 away from the bed base 3 is provided with the electric motor 15, and the electric motor 15 cooperatively drives the slide rest 13 through the screw rod provided on the base 12 and the screw nut provided on the slide rest. The grating ruler 17 is provided on the base 12 along the Y-axis direction, and the grating ruler 17 can accurately measure the displacement of the optical probe 11, and accurately grasp the machining accuracy.

Further, there are two of the optical probes 11 in total. Specifically, the two optical probes 11 can be the emitting end and the receiving end of a laser probe, and can also be other forms of optical probes. The two optical probes 11 are arranged opposite to each other along the Z-axis direction, the proximity switch 16 is provided between the two optical probes 11, and the proximity switch 16 is used to measure the distance between the measuring device and a workpiece being machined. One of the two optical probes arranged opposite to each other emits laser and the other receives laser. The optical probes approach the workpiece until the laser is blocked by the workpiece, and then the outer diameter of the workpiece can be measured from the data thus obtained. When the distance between the workpiece being machined and the measuring device, which is measured by the proximity switch, is close to an appropriate range, the optical probes start to work to detect the outer diameter of the workpiece being machined in real time.

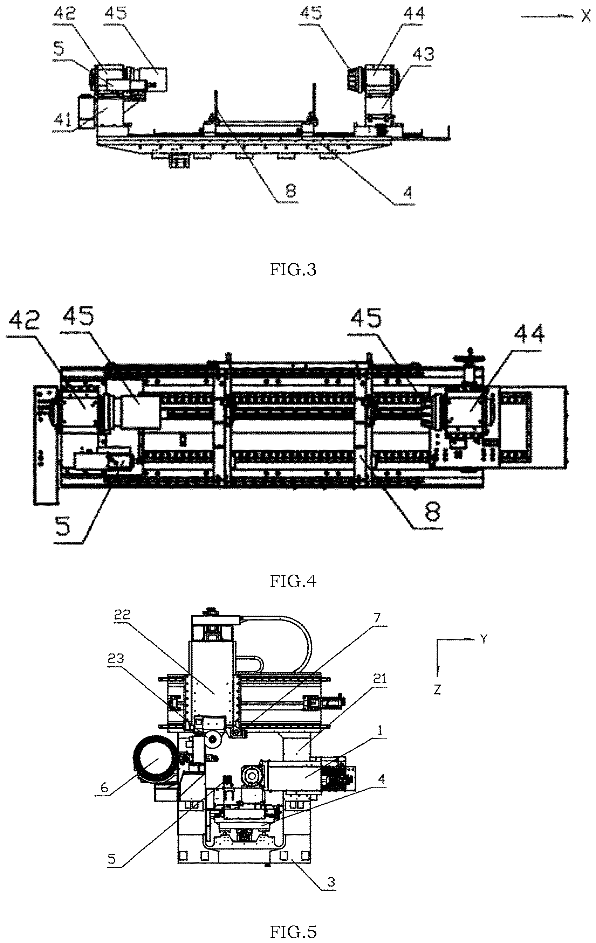

Further, as shown in FIG. 3 and FIG. 4, the workpiece sliding table 4 that can move along the X-axis is provided on the bed base; one end of the workpiece sliding table 4 is fixed with the first support 41; the power spindle 42 is provided on the first support 41; the other end of the workpiece sliding table 4 is provided with the second support 43; the second support 43 can move along the X-axis on the workpiece sliding table 4; the driven spindle 44 is provided on the second support 43; and the opposite end surfaces of the power spindle 42 and the driven spindle 44 are respectively provided with the reference plate 46 and the hydraulic clamping device 45 in sequence.

The workpiece is fixed between the power spindle and the driven spindle. The second support is adjusted to make the distance between the power spindle and the driven spindle appropriate, and then, the workpiece is clamped through the hydraulic clamping device. During machining, the power spindle provides the rotational power to drive the workpiece and the driven spindle to rotate, and then to grind via the grinding wheel 23. The clamping force provided by the hydraulic clamping device is adjustable within a certain range, and can clamp the workpiece tightly without damaging the workpiece.

The outer diameter of the reference plate 46 is a standard value. Before the measurement, the optical probes move rapidly towards the reference plate 46. When the proximity switch 16 senses that the reference plate 46 is relatively close, the optical probes move at a reduced speed and slowly approach the reference plate. When the laser emitted by the optical probes is just blocked by the reference plate, the distance that the optical probes have moved till the moment is accurately obtained via the grating ruler, and thus, this distance corresponds to the standard value outer diameter of the reference plate, and the outer diameter of the workpiece is measured based on this distance.

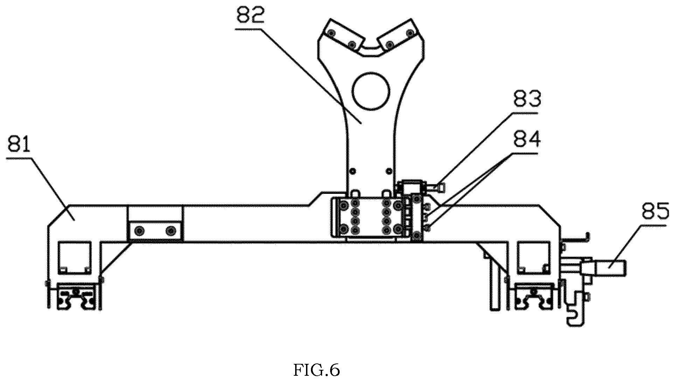

Further, as shown in FIG. 6, the floating support structure 8 is provided on the workpiece sliding table 4; the floating support structure 8 includes the floating bracket 81 that can move along the X-axis direction on the workpiece sliding table 4; the floating support plate 82 is provided on the floating bracket 81; and the floating support plate 82 can be adjusted via the up-down adjustment screw 83 and the left-right adjustment screw 84. The floating support structure can realize the concentric adjustment of the left and right ends of the workpiece, so as to smoothly realize the hydraulic clamping on the left and right sides. The up-down adjustment screw pushes up the wedge block 86 between the floating support plate and the floating bracket so that the floating support plate can be adjusted up and down. There are three left-right adjustment screws in total. The middle adjustment screw and the two adjustment screws on both sides apply opposite forces on the floating support plate. By adjusting the three screws, the floating support plate can be adjusted left and right within a certain range. It is the prior art to adjust the position of the floating support plate by adjusting the screws, and its specific structure will not be repeated here.

Further, as shown in FIG. 3 and FIG. 4, the grinding wheel dresser 5 is provided on the first support 41 to realize onsite dressing of the grinding wheel.

Further, as shown in FIG. 5, the grinding wheel storage 6 is fixed on the column 21. There are profiled grinding wheels with various angles in the grinding wheel storage, which helps facilitate the replacement of the grinding wheels in the machining process and avoid more time consuming due to trimming the grinding wheels, and improves the work efficiency.

Further, as shown in FIG. 5, the lower end of the spindle 22 is fixed with the turning tool holder 7. For eccentric positions that need a large amount of grinding, the turning tool can be mounted on the turning tool holder for simple rough turning of the workpiece.

When in use, the workpiece is placed on the floating support structure 8 in the middle through the hoisting fixture. The floating support structure 8 is adjusted in height up and down or left and right via the up-down adjustment screw 83 and the left-right adjustment screw 84. The workpiece is moved forward and backward together with the floating support structure 8 via the handle 85 mounted on the floating bracket 81. After the workpiece is adjusted to be concentric with the power spindle and driven spindle at both ends, the workpiece is locked and clamped by the hydraulic clamping device 45. After the hydraulic clamping device 45 clamps the workpiece, the machine tool is started. The measuring device is first started for calibration. The optical probes move rapidly towards the reference plate 46. When the proximity switch 16 senses that the reference plate 46 is relatively close, the optical probes move at a reduced speed and slowly approach the reference plate. When the laser emitted by the optical probes is just blocked by the reference plate, the distance that the optical probes have moved till the moment is accurately obtained via the grating ruler, and thus, this distance corresponds to the standard value outer diameter of the reference plate. Taking this distance as a benchmark, in order to obtain more accurate data and eliminate error factors such as the thermal stability of the machine tool itself, repeated measurements are required, and the average value of the measurement results is taken as the final benchmark value. After calibration, the workpiece is rotated so that optical probes 11 are close to the workpiece. The proximity switch 16 detects the position relative to the workpiece to ensure that the optical probes 11 can detect the workpiece and do not collide with the workpiece. The optical probes 11 measure the outer diameter of the workpiece, and determine the maximum grinding amount. If the allowable error range is reached, the next step of grinding can be performed, and detection is carried out during the grinding process. If the workpiece is unqualified, the workpiece will be disassembled.

When grinding, the grinding wheel storage 6 is started and a suitable grinding wheel 23 is selected to be mounted on the spindle to grind the workpiece. During the grinding, the workpiece is detected onsite via the measuring device 1 at any time to check whether the workpiece has reached the allowable value of machining.

Whether the grinding wheel 23 needs to be trimmed onsite is determined according to the machining condition of the workpiece. If trimming is required, the grinding wheel dresser 5 is started to trim the grinding wheel onsite. The grinding wheel dresser 5 can trim angle grinding wheels as well as flat grinding wheels.

In an ordinary horizontal grinding machine, the diameter of the grinding wheel of the grinding shaft is made large to meet the grinding range of the diameter of the workpiece to be machined, but the grinding wheel of a super-large size is difficult to achieve high-speed rotation. In addition, most manufacturers choose silicon carbide or white corundum for the material of grinding wheel due to economic considerations, and this kind of grinding wheel will have the disadvantages of a lot of dust and fast consumption of grinding wheel due to its own material. The planogrinder disclosed by the present invention can realize the onsite measurement of the outer diameter of the workpiece in the early, middle and late stages of grinding, and thus ensures that the assembly and fitting state of the workpiece will not change after the grinding is completed, thereby ensuring the operation accuracy of the entire component. In this way, when the workpiece is assembled into the machine, its own accuracy will not change during operation, and the machine tool can use a grinding wheel of a smaller CBN diameter so as to achieve the advantages of low loss and high speed. The planogrinder disclosed by the present invention can also realize the rapid replacement of grinding wheels for grinding, realize the replacement of grinding wheels of multiple specifications and types, and save the time of onsite dressing of grinding wheels with special angles. The grinding wheel dresser is used to repair the unevenness of the surface of the grinding wheel caused by the wear of the grinding wheel during machining. In addition, the planogrinder disclosed by the present invention can realize convenient clamping of the workpiece, and the workpiece is clamped by hydraulic pressure, and thereby, the damage to the workpiece caused by mechanical clamping is reduced and the problem of uncontrollable clamping force is solved.

Finally, it should be noted that the above embodiments are only used to illustrate the technical solutions of the present invention, but not to limit them. Although the present invention has been described in detail with reference to the foregoing embodiments, a person skilled in the art should understand that the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A planogrinder comprising a measuring device (1), wherein
the measuring device (1) can move along the X-axis direction; an optical probe (11) is provided at one end of the measuring device (1) close to a bed base (3); and the optical probe (11) is used for real-time detection of an outer diameter of a workpiece being machined.

2. The planogrinder according to claim 1, wherein a workpiece sliding table (4) that can move along the X-axis is provided on the bed base; one end of the workpiece sliding table (4) is fixed with a first support (41); a power spindle (42) is provided on the first support (41); the other end of the workpiece sliding table (4) is provided with a second support (43); the second support (43) can move along the X-axis on the workpiece sliding table (4); a driven spindle (44) is provided on the second support (43); and the opposite end surfaces of the power spindle (42) and the driven spindle (44) are respectively provided with a reference plate (46) and a hydraulic clamping device (45) in sequence.

3. The planogrinder according to claim 2, wherein a floating support structure (8) is provided on the workpiece sliding table (4); the floating support structure (8) includes a floating bracket (81) which can move along the X-axis direction on the workpiece sliding table (4); a floating support plate (82) is provided on the floating bracket (81); and the position of the floating support plate (82) can be adjusted via an up-down adjustment screw (83) and a left-right adjustment screw (84).

4. The planogrinder according to claim 2 or 3, wherein a grinding wheel dresser (5) is provided on the first support (41).

5. The planogrinder according to claim 1, wherein the measuring device includes a base (12) and a slide rest (13); the base (12) is fixed on a column (21); the slide rest (13) can move along the Y-axis direction on the base (12); and the optical probe (11) is fixed on the slide rest (13).

6. The planogrinder according to claim 5, wherein a grating ruler (17) is provided on the base (12) along the Y-axis direction.

7. The planogrinder according to claim 5 or 6, wherein a rail (14) is provided on the base (12) along the Y-axis direction; a slider matched with the rail (14) is provided on the slide rest (13); one end of the base (12) away from the bed base (3) is provided with an electric motor (15); and the electric motor (15) cooperatively drives the slide rest (13) through a screw rod provided on the base (12) and a screw nut provided on the slide rest.

8. The planogrinder according to claim 1, wherein there are two of the optical probes (11) in total; the two optical probes (11) are arranged opposite to each other along the Z-axis direction; a proximity switch (16) is provided between the two optical probes (11); and the proximity switch (16) is used to measure the distance between the measuring device and a workpiece being machined.

9. The planogrinder according to claim 1, wherein a grinding wheel storage (6) is fixed on the column (21).

10. The planogrinder according to claim 1, wherein a turning tool holder (7) is fixed at the lower end of a spindle (22).
